(19) Europäisches Patentamt
European Patent Office
Office européen des brevets

(11) **EP 4 691 805 A1**

(12) **EUROPEAN PATENT APPLICATION**

(43) Date of publication:
**11.02.2026 Bulletin 2026/07**

(21) Application number: **25188357.5**

(22) Date of filing: **09.07.2025**

(51) International Patent Classification (IPC):
**B60C 23/06** (2006.01)

(52) Cooperative Patent Classification (CPC):
**B60C 23/061; B60C 23/062**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **09.08.2024 JP 2024133780**

(71) Applicant: **SUMITOMO RUBBER INDUSTRIES,
LTD.**
**Kobe-shi, Hyogo 651-0072 (JP)**

(72) Inventors:
• **TAKEMOTO, Masataka**
  **Kobe-shi, 651-0072 (JP)**
• **INOUE, Tomoyuki**
  **Kobe-shi, 651-0072 (JP)**

(74) Representative: **TBK**
**Bavariaring 4-6**
**80336 München (DE)**

(54) **DEFLATION STATE DETECTION DEVICE, DETERMINATION METHOD, AND PROGRAM**

(57) A deflation state detection device 100 includes: an acquisition processing unit 41 configured to acquire a related value that is related to an air pressure of each tire; a detection processing unit 42 configured to detect a deflation state of the tire if a difference between the related value and a predetermined reference value exceeds a predetermined first threshold value; a first update processing unit 43 configured to update the reference value if an operation on an initialization button 31 is accepted; and a determination processing unit 44 configured to determine whether or not an update timing for the reference value has arrived, based on the related value acquired after the difference exceeds a second threshold value that is equal to or less than the first threshold value and before the operation on the initialization button 31 is accepted.

FIG. 1

EP 4 691 805 A1

**Description**

BACKGROUND OF THE INVENTION

Field of the Invention

The present disclosure relates to a deflation state detection device, a determination method, and a program.

Background Art

A deflation state detection device that can detect a deflation state of pneumatic tires mounted on a vehicle, based on the rotation speeds of the pneumatic tires, has been known (see, for example, Japanese Laid-Open Patent Publication No. 2016-196275). Specifically, in the deflation state detection device, each time a predetermined acquisition timing arrives, a related value that is related to the air pressure of each pneumatic tire, such as the resonance frequency of each pneumatic tire, is acquired based on the rotation speed. In addition, the deflation state is detected if the difference between the acquired related value and a predetermined reference value exceeds a predetermined threshold value.
In the deflation state detection device, the reference value is updated after the air pressure of the pneumatic tire is adjusted or after the pneumatic tire is replaced. Specifically, in the deflation state detection device, if a predetermined update operation such as an operation on an initialization button is accepted, the reference value is updated based on the related value acquired after the update operation is accepted.
Meanwhile, after the air pressure of the pneumatic tire is adjusted or after the pneumatic tire is replaced, the user of the vehicle does not perform the update operation in some cases. In the deflation state detection device, after the air pressure of the pneumatic tire is adjusted or after the pneumatic tire is replaced, if the reference value is not updated, the detection accuracy of the deflation state decreases. On the other hand, when an update timing for the reference value arrives, it is possible to encourage the user of the vehicle to perform the update operation, by notifying the user of the arrival of the update timing. However, conventionally, there has been no configuration for determining whether or not the update timing for the reference value has arrived.
An object of the present disclosure is to provide a deflation state detection device, a determination method, and a program with which it is possible to determine whether or not an update timing for a reference value used for determination as to deflation of a pneumatic tire has arrived.

SUMMARY OF THE INVENTION

A deflation state detection device according to one aspect of the present disclosure includes an acquisition processing unit, a detection processing unit, a first update processing unit, and a determination processing unit. The acquisition processing unit is configured to acquire a related value that is related to an air pressure of each pneumatic tire mounted on a vehicle, based on a rotation speed of the pneumatic tire. The detection processing unit is configured to detect a deflation state of the pneumatic tire if a difference between the related value acquired by the acquisition processing unit and a predetermined reference value exceeds a predetermined first threshold value. The first update processing unit is configured to, if a predetermined update operation is accepted, update the reference value, based on the related value acquired during a first period including a time of acceptance of the update operation. The determination processing unit is configured to determine whether or not an update timing for the reference value has arrived, based on the related value acquired after the difference exceeds a second threshold value that is equal to or less than the first threshold value and before the update operation is accepted.
With this deflation state detection device, it is possible to determine whether or not the update timing for the reference value has arrived.
According to the present disclosure, it is possible to determine whether or not the update timing for the reference value used for determination as to deflation of the pneumatic tire has arrived.

BRIEF DESCRIPTION OF THE DRAWINGS

FIG. 1 illustrates the configuration of a vehicle including a deflation state detection device according to an embodiment of the present disclosure;
FIG. 2 illustrates the configuration of the vehicle including the deflation state detection device according to the embodiment of the present disclosure;
FIG. 3 is a flowchart showing an example of a related value acquisition process executed by the deflation state detection device according to the embodiment of the present disclosure;

FIG. 4 is a flowchart showing an example of a deflation state detection process executed by the deflation state detection device according to the embodiment of the present disclosure;

FIG. 5 is a flowchart showing an example of a first update process executed by the deflation state detection device according to the embodiment of the present disclosure;

FIG. 6 is a flowchart showing an example of a second update process executed by the deflation state detection device according to the embodiment of the present disclosure; and

FIG. 7 illustrates the configuration of a vehicle including a deflation state detection device according to another embodiment of the present disclosure.

DETAILED DESCRIPTION

Hereinafter, an embodiment of the present disclosure will be described with reference to the accompanying drawings. The following embodiment is an example in which the present disclosure is embodied, and does not limit the technical scope of the present disclosure.

[Configuration of Vehicle 1]

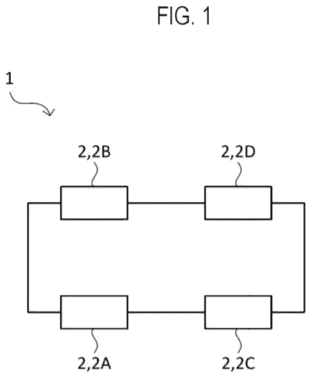

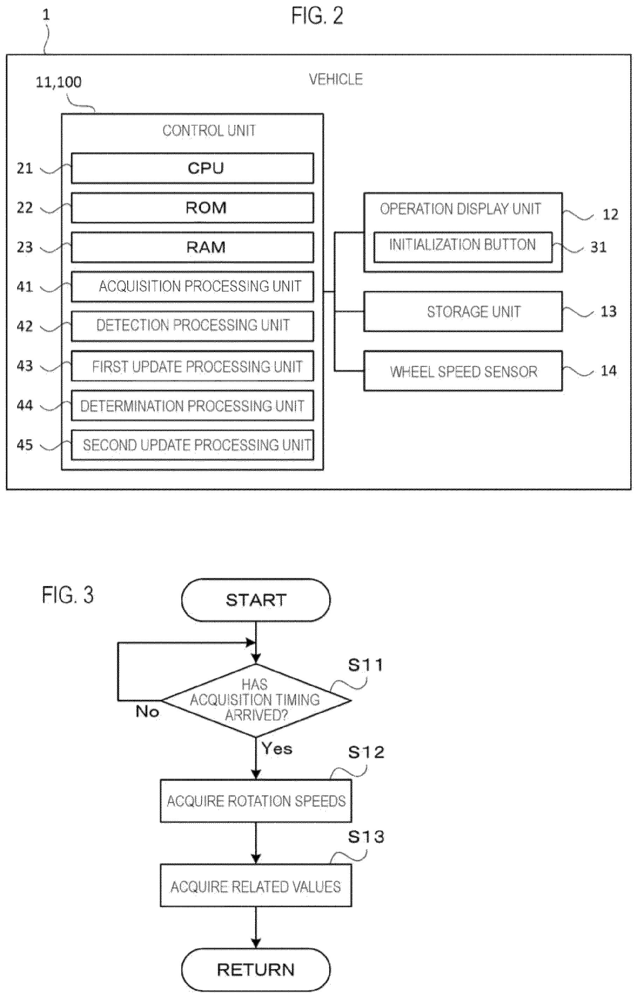

First, the configuration of a vehicle 1 including a deflation state detection device 100 according to an embodiment of the present disclosure will be described with reference to FIG. 1 and FIG. 2.

The vehicle 1 is an automobile such as a passenger car, a bus, or a truck. The vehicle 1 is not limited to the automobile, and may be a motorcycle, a three-wheeled passenger car, or the like.

The vehicle 1 includes four pneumatic tires 2 (see FIG. 1) (hereinafter referred to as "tires 2"). Specifically, the vehicle 1 includes four wheels (the wheel on the front left side, the wheel on the front right side, the wheel on the rear left side, and the wheel on the rear right side), and the tires 2 are mounted on the respective wheels. Hereinafter, the tire 2 mounted on the wheel on the front left side is referred to as "tire 2A" (see FIG. 1). The tire 2 mounted on the wheel on the front right side is referred to as "tire 2B" (see FIG. 1). The tire 2 mounted on the wheel on the rear left side is referred to as "tire 2C" (see FIG. 1). The tire 2 mounted on the wheel on the rear right side is referred to as "tire 2D" (see FIG. 1).

In addition to various components required for traveling such as an engine, the four wheels, the tires 2 (see FIG. 1) mounted on the respective wheels, brakes, and a steering mechanism, the vehicle 1 includes a control unit 11, an operation display unit 12, a storage unit 13, and a wheel speed sensor 14 shown in FIG. 2.

As shown in FIG. 2, the control unit 11 includes a CPU 21, a ROM 22, and a RAM 23. The CPU 21 is a processor that executes various arithmetic processes. The ROM 22 is a nonvolatile storage device in which information such as a control program for causing the CPU 21 to execute various processes is stored in advance. The RAM 23 is a volatile or nonvolatile storage device that is used as a temporary storage memory (work area) for various processes executed by the CPU 21.

The control unit 11 constitutes the deflation state detection device 100 (see FIG. 2).

The deflation state detection device 100 is capable of determining whether or not the tire 2 mounted on the vehicle 1 has become deflated. If the deflation state detection device 100 determines that the tire 2 has become deflated, the deflation state detection device 100 detects a deflation state of the tire 2.

For example, when the air pressure of any of the tires 2 is reduced by a reference pressure loss amount determined in advance from a predetermined optimum value, the deflation state detection device 100 determines that the tire 2 mounted on the vehicle 1 has become deflated. For example, the reference pressure loss amount is 20 percent of the optimum value.

The control unit 11 does not have to be specialized for the function of detecting the deflation state of the tires 2.

The operation display unit 12 includes a display section and an operation section. The display section is provided at a position at which the display section is visible to a driver sitting in the driver's seat of the vehicle 1. For example, the display section is a flat panel display such as a liquid crystal display provided in a center cluster of the vehicle 1. The display section displays various kinds of information in response to control instructions from the control unit 11. The operation section is provided at a position at which the operation section can be operated by the driver sitting in the driver's seat. For example, the operation section is operation buttons provided in the center cluster or a center console of the vehicle 1 and is a touch panel provided on the display section. The display section may also include a notification lamp provided in an instrument panel of the vehicle 1 and corresponding to each of various kinds of notification information to the user of the vehicle 1.

The operation display unit 12 includes an initialization button 31 shown in FIG. 2. For example, the initialization button 31 is a physical switch provided in the center cluster or the center console of the vehicle 1. The initialization button 31 is used to update a reference value used for determination as to deflation of the tires 2. As described later, the reference value is updated when the initialization button 31 is operated.

The storage unit 13 is a nonvolatile storage device. For example, the storage unit 13 is a nonvolatile memory such as a flash memory.

The wheel speed sensor 14 is a sensor capable of detecting the rotation speed of the wheel (rotation speed of the tire 2). The wheel speed sensor 14 is provided for each of the wheels. For example, the wheel speed sensor 14 outputs an electrical signal corresponding to a change in a magnetic field generated by rotation of a sensor rotor having a plurality of teeth provided inside the wheel. The electrical signal outputted from each wheel speed sensor 14 is inputted into the control unit 11. The control unit 11 acquires the rotation speed of each tire 2, based on the electrical signal outputted from each wheel speed sensor 14.

[Functional Configuration of Control Unit 11]

Next, a functional configuration, included in the control unit 11, for detecting the deflation state of the tires 2 will be described with reference to FIG. 2.

As shown in FIG. 2, the control unit 11 includes an acquisition processing unit 41, a detection processing unit 42, a first update processing unit 43, a determination processing unit 44, and a second update processing unit 45.

Specifically, the CPU 21 of the control unit 11 functions as each of the above-described processing units by executing the control program stored in advance in the ROM 22.

The control program may be recorded in a computer-readable storage medium such as a CD, a DVD, or a flash memory, read from the storage medium, and stored in the storage unit 13. The control program may be a program for causing a plurality of processors to function as each processing unit shown in FIG. 2. In addition, some or all of the processing units included in the control unit 11 may be composed of an electronic circuit.

The acquisition processing unit 41 acquires related values that are related to the air pressures of the tires 2 mounted on the vehicle 1, based on the rotation speeds of the tires 2 each time a predetermined acquisition timing arrives.

For example, the acquisition processing unit 41 calculates four such related values: DEL1, DEL3, the resonance frequency of the tire 2A, and the resonance frequency of the tire 2B. DEL1, DEL3, the resonance frequency of the tire 2A, and the resonance frequency of the tire 2B function as index values for determining the air pressure states of the tires 2. That is, the acquisition processing unit 41 calculates index values for determining the air pressure states of the tires 2.

DEL1 is a value that becomes larger as the rotation speed of the tire 2A and the rotation speed of the tire 2D increase and becomes smaller as the rotation speed of the tire 2B and the rotation speed of the tire 2C increase, or a value that becomes smaller as the rotation speed of the tire 2A and the rotation speed of the tire 2D increase and becomes larger as the rotation speed of the tire 2B and the rotation speed of the tire 2C increase.

For example, DEL1 is calculated according to the following equation (1). "V1" in the equation (1) is the rotation speed of the tire 2A. "V2" in the equation (1) is the rotation speed of the tire 2B. "V3" in the equation (1) is the rotation speed of the tire 2C. "V4" in the equation (1) is the rotation speed of the tire 2D. The rotation speeds of the four tires 2 are acquired based on the electrical signals outputted from the four wheel speed sensors 14 corresponding to the four tires 2.

$$DEL1 = [(V1 + V4)/(V2 + V3) - 1] \times 100 \ (\%) \quad (1)$$

DEL3 is a value that becomes larger as the rotation speed of the tire 2A and the rotation speed of the tire 2C increase and becomes smaller as the rotation speed of the tire 2B and the rotation speed of the tire 2D increase, or a value that becomes smaller as the rotation speed of the tire 2A and the rotation speed of the tire 2C increase and becomes larger as the rotation speed of the tire 2B and the rotation speed of the tire 2D increase.

For example, DEL3 is calculated according to the following equation (2).

$$DEL3 = [(V1 + V3)/(V2 + V4) - 1] \times 100 \ (\%) \quad (2)$$

The resonance frequency of the tire 2A is calculated based on the rotation speed of the tire 2A.

The resonance frequency of the tire 2B is calculated based on the rotation speed of the tire 2B.

A known method may be used as a method for acquiring the resonance frequency of the tire 2. For example, the resonance frequency of the tire 2 is acquired by performing time series analysis, based on a second-order autoregressive (AR) model, on rotational acceleration information calculated from the rotation speed of the tire 2 acquired by the wheel speed sensor 14.

For example, the acquisition timing is a timing that arrives at a predetermined cycle from the start of traveling of the vehicle 1. For example, the cycle is any time between 0.1 seconds and 5 seconds. The acquisition timing may be a timing when the vehicle 1 is traveling at a speed equal to or higher than a predetermined speed, the vehicle 1 is not accelerating or decelerating, and the vehicle 1 is not cornering. In addition, the related values may be acquired at any timing.

The related values acquired by the acquisition processing unit 41 do not have to be limited to the above-described four values. For example, the related values acquired by the acquisition processing unit 41 may include the resonance frequency of the tire 2C and the resonance frequency of the tire 2D. In addition, the related values acquired by the acquisition processing unit 41 may include DEL2. DEL2 is a value that becomes larger as the rotation speed of the tire 2A and the rotation speed of the tire 2B increase and becomes smaller as the rotation speed of the tire 2C and the rotation speed of the tire 2D increase, or a value that becomes smaller as the rotation speed of the tire 2A and the rotation speed of the tire 2B increase and becomes larger as the rotation speed of the tire 2C and the rotation speed of the tire 2D increase.

The detection processing unit 42 detects the deflation state of the tires 2 when the difference between the related value acquired by the acquisition processing unit 41 and a predetermined reference value exceeds a predetermined first threshold value.

Here, in the deflation state detection device 100, the reference value corresponding to each of the related values acquired by the acquisition processing unit 41, and the first threshold value are determined in advance.

For example, the reference value corresponding to DEL1 is a value that is set based on DEL1 acquired by the acquisition processing unit 41 in a state where the air pressure of each of the four tires 2 is the optimum value. For example, the reference value corresponding to DEL1 is the same value as DEL1 acquired by the acquisition processing unit 41 in a state where the air pressure of each of the four tires 2 is the optimum value. Alternatively, the reference value corresponding to DEL1 may be the average value of multiple DEL1s acquired by the acquisition processing unit 41 in a state where the air pressure of each of the four tires 2 is the optimum value.

As with the reference value corresponding to DEL1, the reference value corresponding to DEL3 is a value that is set based on DEL3 acquired by the acquisition processing unit 41 in a state where the air pressure of each of the four tires 2 is the optimum value.

The reference value corresponding to the resonance frequency of the tire 2A is a value that is set based on the resonance frequency of the tire 2A acquired by the acquisition processing unit 41 in a state where the air pressure of the tire 2A is the optimum value. For example, the reference value corresponding to the resonance frequency of the tire 2A is the same value as the resonance frequency of the tire 2A acquired by the acquisition processing unit 41 in a state where the air pressure of the tire 2A is the optimum value. Alternatively, the reference value corresponding to the resonance frequency of the tire 2A may be the average value of multiple resonance frequencies of the tire 2A acquired by the acquisition processing unit 41 in a state where the air pressure of the tire 2A is the optimum value.

As with the reference value corresponding to the resonance frequency of the tire 2A, the reference value corresponding to the resonance frequency of the tire 2B is a value that is set based on the resonance frequency of the tire 2B acquired by the acquisition processing unit 41 in a state where the air pressure of the tire 2B is the optimum value.

The first threshold value corresponding to DEL1 is a value that indicates the difference between: DEL1 acquired by the acquisition processing unit 41 in a state where the air pressure of each of any three tires 2 out of the four tires 2 is the optimum value and the air pressure of the remaining one tire 2 is reduced by the reference pressure loss amount from the optimum value; and the reference value corresponding to DEL1.

The first threshold value corresponding to DEL3 is a value that indicates the difference between: DEL3 acquired by the acquisition processing unit 41 in a state where the air pressure of each of any three tires 2 out of the four tires 2 is the optimum value and the air pressure of the remaining one tire 2 is reduced by the reference pressure loss amount from the optimum value; and the reference value corresponding to DEL3.

The first threshold value corresponding to the resonance frequency of the tire 2A is a value that indicates the difference between: the resonance frequency of the tire 2A acquired by the acquisition processing unit 41 in a state where the air pressure of the tire 2A is reduced by the reference pressure loss amount from the optimum value; and the reference value corresponding to the resonance frequency of the tire 2A.

The first threshold value corresponding to the resonance frequency of the tire 2B is a value that indicates the difference between: the resonance frequency of the tire 2B acquired by the acquisition processing unit 41 in a state where the air pressure of the tire 2B is reduced by the reference pressure loss amount from the optimum value; and the reference value corresponding to the resonance frequency of the tire 2B.

For example, for each of the related values acquired by the acquisition processing unit 41, the detection processing unit 42 determines whether or not the difference between the related value and the reference value exceeds the first threshold value. Then, the detection processing unit 42 detects the deflation state of the tires 2 if it is determined for any of the related values that the difference between the related value and the reference value exceeds the first threshold value. The detection processing unit 42 may detect the deflation state of the tires 2 if the number of times it is determined for any of the related values that the difference between the related value and the reference value exceeds the first threshold value exceeds a predetermined number.

If the deflation state of the tires 2 is detected, the detection processing unit 42 identifies the deflated tire 2.

For example, if the difference between the resonance frequency of the tire 2A and the reference value corresponding to this resonance frequency exceeds the first threshold value, the detection processing unit 42 determines that the tire 2A has been deflated.

If the difference between the resonance frequency of the tire 2B and the reference value corresponding to this resonance frequency exceeds the first threshold value, the detection processing unit 42 determines that the tire 2B has been deflated.

If the difference between the related value of either DEL1 or DEL3 and the reference value corresponding to this related value exceeds the first threshold value, the detection processing unit 42 identifies the deflated tire 2, based on the combination of the sign of DEL1 and the sign of DEL3. Specifically, if the sign of DEL1 is positive and the sign of DEL3 is positive, the detection processing unit 42 determines that the tire 2A has been deflated. If the sign of DEL1 is negative and the sign of DEL3 is negative, the detection processing unit 42 determines that the tire 2B has been deflated. If the sign of DEL1 is negative and the sign of DEL3 is positive, the detection processing unit 42 determines that the tire 2C has been deflated. If the sign of DEL1 is positive and the sign of DEL3 is negative, the detection processing unit 42 determines that the tire 2D has been deflated.

If the deflation state of the tires 2 is detected, the control unit 11 notifies the user of the vehicle 1 of this detection. For example, the control unit 11 displays a message indicating that the deflation state of the tires 2 has been detected and also indicating the deflated tire 2, on the operation display unit 12. In addition, the control unit 11 may turn on a notification lamp for notifying that the deflation state of the tires 2 has been detected. The control unit 11 also generates a predetermined warning sound in addition to notifying that the deflation state of the tires 2 has been detected. Accordingly, the user of the vehicle 1 can recognize the deflation state of the tires 2 and take action to eliminate the deflation state of the tires 2 (adjusting the air pressure of the tire 2 or replacing the tire 2).

In the vehicle 1, each reference value is updated after the air pressure of the tire 2 is adjusted or the tire 2 is replaced.

If the predetermined update operation is accepted, the first update processing unit 43 updates the reference values, based on the related values acquired during a first period including the time of acceptance of the update operation.

For example, the update operation is an operation of pressing the initialization button 31 (see FIG. 2).

For example, the first period is a period that starts from the time of acceptance of the update operation. The first period is also a period that ends after the number of times the acquisition timing has arrived from the time of acceptance of the update operation reaches a predetermined number.

If the update operation is accepted, the first update processing unit 43 updates the reference value corresponding to each of the related values.

For example, the first update processing unit 43 sets any of DEL1s acquired during the first period, as a new reference value corresponding to DEL1. Alternatively, the first update processing unit 43 may set the average value of the multiple DEL1s acquired during the first period, as a new reference value corresponding to DEL1.

The first update processing unit 43 sets any of DEL3s acquired during the first period, as a new reference value corresponding to DEL3. Alternatively, the first update processing unit 43 may set the average value of the multiple DEL3s acquired during the first period, as a new reference value corresponding to DEL3.

The first update processing unit 43 sets any of resonance frequencies of the tire 2A acquired during the first period, as a new reference value corresponding to the resonance frequency of the tire 2A. Alternatively, the first update processing unit 43 may set the average value of the multiple resonance frequencies of the tire 2A acquired during the first period, as a new reference value corresponding to the resonance frequency of the tire 2A.

The first update processing unit 43 sets any of resonance frequencies of the tire 2B acquired during the first period, as a new reference value corresponding to the resonance frequency of the tire 2B. Alternatively, the first update processing unit 43 may set the average value of the multiple resonance frequencies of the tire 2B acquired during the first period, as a new reference value corresponding to the resonance frequency of the tire 2B.

The update operation does not have to be limited to the operation on the initialization button 31 (see FIG. 2). For example, the update operation may be an operation on an operation key (soft key) displayed on the display section in accordance with a predetermined operation on the operation display unit 12. In the case where the control unit 11 is connected in advance to a portable terminal such as a smartphone carried by the user of the vehicle 1 so as to be able to communicate therewith, the update operation may be an operation performed on the portable terminal. The first period may be a period that starts before the update operation is accepted.

Meanwhile, after the air pressure of the tire 2 is adjusted or after the tire 2 is replaced, the user of the vehicle 1 does not perform the update operation in some cases. In the deflation state detection device 100, after the air pressure of the tire 2 is adjusted or after the tire 2 is replaced, if the reference value is not updated, the detection accuracy of the deflation state of the tire 2 decreases. On the other hand, when the update timing for the reference value arrives, it is possible to encourage the user of the vehicle 1 to perform the update operation, by notifying the user of the arrival of the update timing. However, conventionally, there has been no configuration for determining whether or not the update timing has arrived.

In contrast, with the deflation state detection device 100 according to the embodiment of the present disclosure, it is possible to determine whether or not the update timing has arrived, as described below.

The determination processing unit 44 determines whether or not the update timing has arrived, based on the related value acquired during a determination period after the difference between the related value acquired by the acquisition processing unit 41 and the reference value exceeds a second threshold value that is equal to or less than the first threshold value and before the update operation is accepted.

Here, the second threshold value is a value smaller than the first threshold value. For example, the second threshold value is half the first threshold value. Accordingly, compared to a configuration in which the second threshold value is the same as the first threshold value, even if the air pressure of the tire 2 is adjusted or the tire 2 is replaced before the deflation state of the tire 2 is detected, it is possible to detect the occurrence of these events, that is, the arrival of the update timing. The second threshold value may be the same as the first threshold value.

For example, the determination period is a period that starts from the time at which the difference between any of the related values acquired by the acquisition processing unit 41 and the reference value corresponding to this related value exceeds the second threshold value.

For example, the determination processing unit 44 determines that the update timing has arrived, if each of the four related values acquired during the determination period satisfies a predetermined determination condition corresponding to the related value.

Specifically, the determination condition corresponding to DEL1 is that DEL1 acquired during the determination period is included in a predetermined first range. The first range is a range from a lower limit value that is lower than the reference value corresponding to DEL1 to an upper limit value that is higher than the reference value corresponding to DEL1. For example, the first range is a range having the reference value corresponding to DEL1, as a median value. The lower limit value of the first range is determined such that the difference between the lower limit value and the reference value corresponding to DEL1 is less than the second threshold value. For example, the lower limit value of the first range is set such that the difference between the lower limit value and the reference value corresponding to DEL1 is the same as the amount of change in DEL1 when any of the air pressures of the four tires 2 decreases by 3 to 5 percent.

In addition, the determination condition corresponding to DEL3 is that DEL3 acquired during the determination period is included in a predetermined second range. The second range is a range from a lower limit value that is lower than the reference value corresponding to DEL3 to an upper limit value that is higher than the reference value corresponding to DEL3. For example, the second range is a range having the reference value corresponding to DEL3, as a median value. The lower limit value of the second range is determined such that the difference between the lower limit value and the reference value corresponding to DEL3 is less than the second threshold value. For example, the lower limit value of the second range is set such that the difference between the lower limit value and the reference value corresponding to DEL3 is the same as the amount of change in DEL3 when any of the air pressures of the four tires 2 decreases by 3 to 5 percent.

In addition, the determination condition corresponding to the resonance frequency of the tire 2A is that the resonance frequency of the tire 2A acquired during the determination period is included in a predetermined third range. The third range is a range from a lower limit value that is lower than the reference value corresponding to the resonance frequency of the tire 2A to an upper limit value that is higher than the reference value corresponding to the resonance frequency of the tire 2A. For example, the third range is a range having the reference value corresponding to the resonance frequency of the tire 2A, as a median value. The lower limit value of the third range is determined such that the difference between the lower limit value and the reference value corresponding to the resonance frequency of the tire 2A is less than the second threshold value. For example, the lower limit value of the third range is set such that the difference between the lower limit value and the reference value corresponding to the resonance frequency of the tire 2A is the same as the amount of change in the resonance frequency of the tire 2A when the air pressure of the tire 2A decreases by 3 to 5 percent.

In addition, the determination condition corresponding to the resonance frequency of the tire 2B is that the resonance frequency of the tire 2B acquired during the determination period is included in a predetermined fourth range. The fourth range is a range from a lower limit value that is lower than the reference value corresponding to the resonance frequency of the tire 2B to an upper limit value that is higher than the reference value corresponding to the resonance frequency of the tire 2B. For example, the fourth range is a range having the reference value corresponding to the resonance frequency of the tire 2B, as a median value. The lower limit value of the fourth range is determined such that the difference between the lower limit value and the reference value corresponding to the resonance frequency of the tire 2B is less than the second threshold value. For example, the lower limit value of the fourth range is set such that the difference between the lower limit value and the reference value corresponding to the resonance frequency of the tire 2B is the same as the amount of change in the resonance frequency of the tire 2B when the air pressure of the tire 2B decreases by 3 to 5 percent.

If the update timing is determined to have arrived by the determination processing unit 44, the second update processing unit 45 updates the reference values, based on the related values acquired during a second period including the time of the arrival of the update timing.

For example, the second period is a period that starts from the time of the arrival of the update timing. In addition, the second period is a period that ends after the number of times the acquisition timing has arrived from the time of the arrival of the update timing reaches a predetermined number. The second period may be a period that starts before the time of the arrival of the update timing.

When the update timing arrives, the second update processing unit 45 updates the reference value corresponding to each of the related values.

For example, the second update processing unit 45 sets any of DEL1s acquired during the second period, as a new reference value corresponding to DEL1. Alternatively, the second update processing unit 45 may set the average value of the multiple DEL1s acquired during the second period, as a new reference value corresponding to DEL1.

In addition, the second update processing unit 45 sets any of DEL3s acquired during the second period, as a new reference value corresponding to DEL3. Alternatively, the second update processing unit 45 may set the average value of the multiple DEL3s acquired during the second period, as a new reference value corresponding to DEL3.

In addition, the second update processing unit 45 sets any of resonance frequencies of the tire 2A acquired during the second period, as a new reference value corresponding to the resonance frequency of the tire 2A. Alternatively, the second update processing unit 45 may set the average value of the multiple resonance frequencies of the tire 2A acquired during the second period, as a new reference value corresponding to the resonance frequency of the tire 2A.

In addition, the second update processing unit 45 sets any of resonance frequencies of the tire 2B acquired during the second period, as a new reference value corresponding to the resonance frequency of the tire 2B. Alternatively, the second update processing unit 45 may set the average value of the multiple resonance frequencies of the tire 2B acquired during the second period, as a new reference value corresponding to the resonance frequency of the tire 2B.

Hereinafter, a determination method of the present disclosure will be described together with an example of a procedure for each process executed by the control unit 11.

[Related Value Acquisition Process]

First, an example of the procedure for a related value acquisition process executed by the control unit 11 will be described with reference to FIG. 3. Here, steps S11, S12 ... represent numbers of the processing procedure (steps) executed by the control unit 11. The related value acquisition process is executed while the vehicle 1 is traveling.

<Step S11>

First, in step S11, the control unit 11 determines whether or not the acquisition timing has arrived.

Here, if the control unit 11 determines that the acquisition timing has arrived (Yes side in S11), the control unit 11 shifts the process to step S12. If the acquisition timing has not arrived (No side in S11), the control unit 11 waits for the arrival of the acquisition timing in step S11.

<Step S12>

In step S12, the control unit 11 acquires the rotation speed of each of the tires 2.

Specifically, the control unit 11 acquires the rotation speed of each of the tires 2 using each of the wheel speed sensors 14.

<Step S13>

In step S13, the control unit 11 acquires the four related values. The processes in step S11 to step S13 are an example of an acquisition step of the present disclosure and are executed by the acquisition processing unit 41 of the control unit 11.

Specifically, the control unit 11 acquires DEL1, based on the rotation speed of each of the tires 2 acquired by the process in step S12. The control unit 11 also acquires DEL3, based on the rotation speed of each of the tires 2 acquired by the process in step S12. In addition, the control unit 11 acquires the resonance frequency of the tire 2A, based on the rotation speed of the tire 2A acquired by the process in step S12. Moreover, the control unit 11 acquires the resonance frequency of the tire 2B, based on the rotation speed of the tire 2B acquired by the process in step S12.

[Deflation State Detection Process]

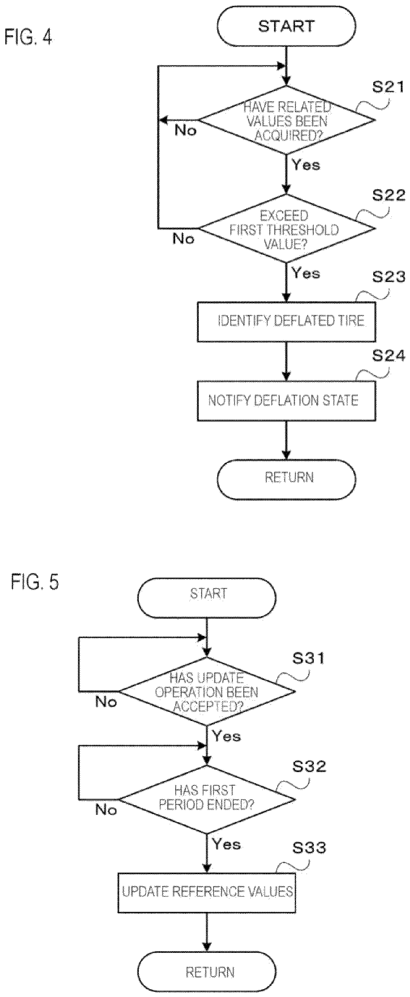

Next, an example of the procedure for a deflation state detection process executed by the control unit 11 will be described with reference to FIG. 4. The deflation state detection process is executed while the vehicle 1 is traveling.

<Step S21>

First, in step S21, the control unit 11 determines whether or not the four related values have been acquired. That is, the control unit 11 determines whether or not the process in step S13 of the related value acquisition process has been executed.

Here, if the control unit 11 determines that the four related values have been acquired (Yes side in S21), the control unit 11 shifts the process to step S22. If the four related values have not been acquired (No side in S21), the control unit 11 waits for the acquisition of the four related values in step S21.

<Step S22>

In step S22, for any of the four related values acquired by the process in step S21, the control unit 11 determines whether or not the difference between the related value and the reference value exceeds the first threshold value. The process in step S22 is an example of a detection step of the present disclosure and is executed by the detection processing unit 42 of the control unit 11.
Here, if, for any of the four related values, the control unit 11 determines that the difference between the related value and the reference value exceeds the first threshold value (Yes side in S22), the control unit 11 shifts the process to step S23. If, for all of the four related values, the differences between the related values and the reference values do not exceed the first threshold value (No side in S22), the control unit 11 shifts the process to step S21.

<Step S23>

In step S23, the control unit 11 identifies the deflated tire 2.
Specifically, if the difference between the resonance frequency of the tire 2A and the reference value corresponding to this resonance frequency exceeds the first threshold value, the control unit 11 determines that the tire 2A has been deflated.
If the difference between the resonance frequency of the tire 2B and the reference value corresponding to this resonance frequency exceeds the first threshold value, the control unit 11 determines that the tire 2B has been deflated.
If the difference between the related value of either DEL1 or DEL3 and the reference value corresponding to this related value exceeds the first threshold value, the control unit 11 identifies the deflated tire 2, based on the combination of the sign of DEL1 and the sign of DEL3.

<Step S24>

In step S24, the control unit 11 notifies the user of the vehicle 1 that the deflation state of the tires 2 has been detected.
For example, the control unit 11 displays a message indicating that the deflation state of the tires 2 has been detected and also indicating the deflated tire 2, on the operation display unit 12. In addition, the control unit 11 generates the predetermined warning sound.

[First Update Process]

Next, an example of the procedure for a first update process executed by the control unit 11 will be described with reference to FIG. 5.

<Step S31>

First, in step S31, the control unit 11 determines whether or not the update operation has been accepted.
Here, if the control unit 11 determines that the update operation has been accepted (Yes side in S31), the control unit 11 shifts the process to step S32. If the update operation has not been accepted (No side in S31), the control unit 11 waits for the acceptance of the update operation in step S31.

<Step S32>

First, in step S32, the control unit 11 determines whether or not the first period has ended.
Specifically, if the number of times the acquisition timing has arrived from the time of acceptance of the update operation has reached a predetermined number, the control unit 11 determines that the first period has ended.
Here, if the control unit 11 determines that the first period has ended (Yes side in S32), the control unit 11 shifts the process to step S33. If the first period has not ended (No side in S32), the control unit 11 waits for the end of the first period in step S32.

<Step S33>

In step S33, the control unit 11 updates the reference values, based on the related values acquired during the first period. The process in step S33 is an example of an update step of the present disclosure and is executed by the first update processing unit 43 of the control unit 11.

Specifically, the control unit 11 sets any of DEL1 s acquired during the first period, as a new reference value corresponding to DEL1.

The control unit 11 sets any of DEL3s acquired during the first period, as a new reference value corresponding to DEL3.

The control unit 11 sets any of resonance frequencies of the tire 2A acquired during the first period, as a new reference value corresponding to the resonance frequency of the tire 2A.

The control unit 11 sets any of resonance frequencies of the tire 2B acquired during the first period, as a new reference value corresponding to the resonance frequency of the tire 2B.

[Second Update Process]

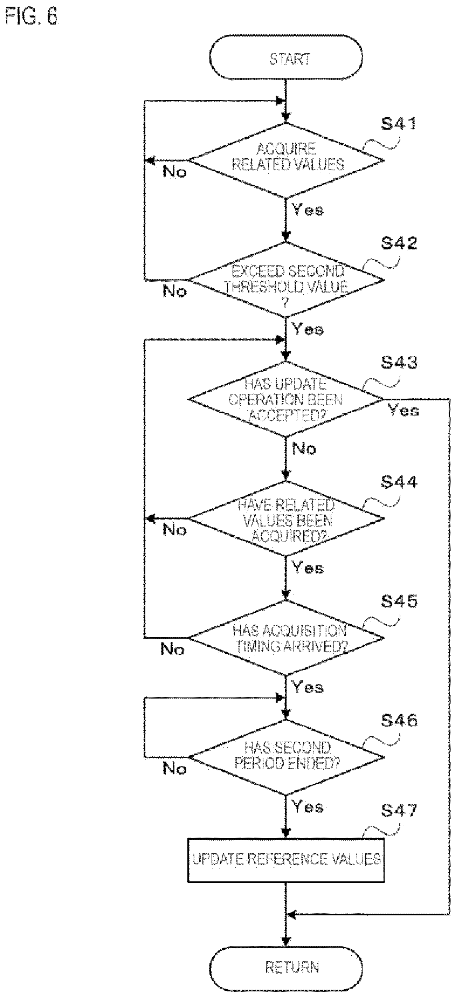

Next, an example of the procedure for a second update process executed by the control unit 11 will be described with reference to FIG. 6.

<Step S41>

First, in step S41, the control unit 11 determines whether or not the four related values have been acquired. That is, the control unit 11 determines whether or not the process in step S13 of the related value acquisition process has been executed.

Here, if the control unit 11 determines that the four related values have been acquired (Yes side in S41), the control unit 11 shifts the process to step S42. If the four related values have not been acquired (No side in S41), the control unit 11 waits for the acquisition of the four related values in step S41.

<Step S42>

In step S42, the control unit 11 determines whether or not the difference between any of the four related values acquired by the process in step S41 and the reference value exceeds the second threshold value.

Here, if the control unit 11 determines that the difference between any of the four related values and the reference value exceeds the second threshold value (Yes side in S42), the control unit 11 shifts the process to step S43. If the differences between the respective four related values and the reference values do not exceed the second threshold value (No side in S42), the control unit 11 shifts the process to step S41.

<Step S43>

In step S43, the control unit 11 determines whether or not the update operation has been accepted.

Here, if the control unit 11 determines that the update operation has been accepted (Yes side in S43), the control unit 11 shifts the process to step S41. If the update operation has not been accepted (No side in S43), the control unit 11 shifts the process to step S44.

<Step S44>

In step S44, the control unit 11 determines whether or not the four related values have been acquired. That is, the control unit 11 determines whether or not the process in step S13 of the related value acquisition process has been executed.

Here, if the control unit 11 determines that the four related values have been acquired (Yes side in S44), the control unit 11 shifts the process to step S45. If the four related values have not been acquired (No side in S44), the control unit 11 shifts the process to step S43.

<Step S45>

In step S45, the control unit 11 determines whether or not the update timing has arrived. The process in step S45 is an example of a determination step of the present disclosure and is executed by the determination processing unit 44 of the control unit 11.

Specifically, if each of the four related values acquired by the process in immediately preceding step S44 satisfies the determination condition corresponding to the related value, the control unit 11 determines that the update timing has arrived.

Here, if the control unit 11 determines that the update timing has arrived (Yes side in S45), the control unit 11 shifts the process to step S46. If the update timing has not arrived (No side in S45), the control unit 11 shifts the process to step S43.

<Step S46>

In step S46, the control unit 11 determines whether or not the second period has ended.

Specifically, if the number of times the acquisition timing has arrived from the time of the arrival of the update timing has reached a predetermined number, the control unit 11 determines that the second period has ended.

Here, if the control unit 11 determines that the second period has ended (Yes side in S46), the control unit 11 shifts the process to step S47. If the second period has not ended (No side in S46), the control unit 11 waits for the end of the second period in step S46.

<Step S47>

In step S47, the control unit 11 updates the reference values, based on the related values acquired during the second period. The process in step S47 is executed by the second update processing unit 45 of the control unit 11.

Specifically, the control unit 11 sets any of DEL1s acquired during the second period, as a new reference value corresponding to DEL1.

The control unit 11 sets any of DEL3s acquired during the second period, as a new reference value corresponding to DEL3.

The control unit 11 sets any of resonance frequencies of the tire 2A acquired during the second period, as a new reference value corresponding to the resonance frequency of the tire 2A.

The control unit 11 sets any of resonance frequencies of the tire 2B acquired during the second period, as a new reference value corresponding to the resonance frequency of the tire 2B.

As described above, the deflation state detection device 100 is capable of determining whether or not the update timing has arrived.

In addition, in the deflation state detection device 100, if it is determined that the update timing has arrived, the reference values are updated automatically. Accordingly, compared to a configuration in which the reference values are not updated automatically, it is possible to omit the user's time and effort required to perform the update operation.

[Another Embodiment]

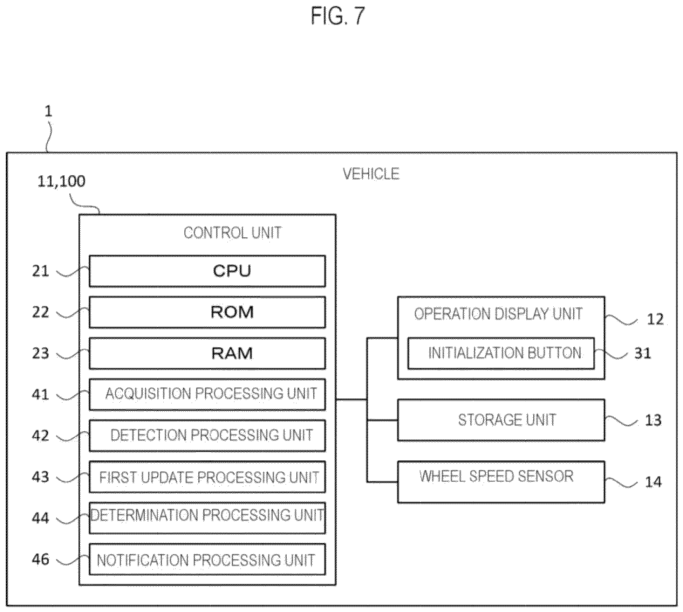

The control unit 11 may include a notification processing unit 46 shown in FIG. 7, instead of the second update processing unit 45.

If the update timing is determined to have arrived by the determination processing unit 44, the notification processing unit 46 notifies that the update timing has arrived.

For example, the notification processing unit 46 displays a message indicating that the update timing has arrived, on the operation display unit 12. The notification processing unit 46 may turn on a notification lamp for notifying that the update timing has arrived. The notification processing unit 46 may also generate a predetermined warning sound in addition to notifying that the update timing has arrived. Accordingly, the user of the vehicle 1 can recognize that the update timing has arrived. Therefore, it is possible to encourage the user of the vehicle 1 to perform the update operation.

The embodiment of the present disclosure described above includes disclosure items (1) to (7) described below.

A disclosure item (1) is a deflation state detection device including: an acquisition processing unit configured to acquire a related value that is related to an air pressure of each pneumatic tire mounted on a vehicle, based on a rotation speed of the pneumatic tire; a detection processing unit configured to detect a deflation state of the pneumatic tire if a difference between the related value acquired by the acquisition processing unit and a predetermined reference value exceeds a predetermined first threshold value; a first update processing unit configured to, if a predetermined update operation is accepted, update the reference value, based on the related value acquired during a first period including a time of acceptance of the update operation; and a determination processing unit configured to determine whether or not an update timing for the reference value has arrived, based on the related value acquired after the difference exceeds a second threshold value that is equal to or less than the first threshold value and before the update operation is accepted.

With this device, it is possible to determine whether or not the update timing has arrived.

A disclosure item (2) is the deflation state detection device according to the disclosure item (1), wherein, if the related value acquired after the difference exceeds the second threshold value and before the update operation is accepted is included in a predetermined range including the reference value, the determination processing unit determines that the update timing has arrived.

A disclosure item (3) is the deflation state detection device according to the disclosure item (1) or (2), further including a second update processing unit configured to, if the update timing is determined to have arrived by the determination processing unit, update the reference value, based on the related value acquired during a second period including a time of arrival of the update timing.

With this device, since the reference value is updated automatically if it is determined that the update timing has arrived, it is possible to omit the user's time and effort required to perform the update operation, compared to a configuration in which the reference value is not updated automatically.

A disclosure item (4) is the deflation state detection device according to any one of the disclosure items (1) to (3), further including a notification processing unit configured to, if the update timing is determined to have arrived by the determination processing unit, notify that the update timing has arrived.

With this device, it is possible to cause the user of the vehicle to recognize that the update timing has arrived, and encourage the user to perform the update operation.

A disclosure item (5) is the deflation state detection device according to any one of the disclosure items (1) to (4), wherein the second threshold value is smaller than the first threshold value.

With this device, compared to a configuration in which the second threshold value is the same as the first threshold value, even if the air pressure of the tire is adjusted or the tire is replaced before the deflation state of the tire is detected, it is possible to detect the occurrence of these events, that is, the arrival of the update timing.

A disclosure item (6) is a determination method executed by one or more processors, the determination method including: an acquisition step of acquiring a related value that is related to an air pressure of each pneumatic tire mounted on a vehicle, based on a rotation speed of the pneumatic tire; a detection step of detecting a deflation state of the pneumatic tire if a difference between the related value acquired by the acquisition step and a predetermined reference value exceeds a predetermined first threshold value; an update step of, if a predetermined update operation is accepted, updating the reference value, based on the related value acquired during a first period including a time of acceptance of the update operation; and a determination step of determining whether or not an update timing for the reference value has arrived, based on the related value acquired after the difference exceeds a second threshold value that is equal to or less than the first threshold value and before the update operation is accepted.

With this method, as in the device of the disclosure item (1), it is possible to determine whether or not the update timing has arrived.

A disclosure item (7) is a program for causing one or more processors to execute: an acquisition step of acquiring a related value that is related to an air pressure of each pneumatic tire mounted on a vehicle, based on a rotation speed of the pneumatic tire; a detection step of detecting a deflation state of the pneumatic tire if a difference between the related value acquired by the acquisition step and a predetermined reference value exceeds a predetermined first threshold value; an update step of, if a predetermined update operation is accepted, updating the reference value, based on the related value acquired during a first period including a time of acceptance of the update operation; and a determination step of determining whether or not an update timing for the reference value has arrived, based on the related value acquired after the difference exceeds a second threshold value that is equal to or less than the first threshold value and before the update operation is accepted.

With this program, as in the device of the disclosure item (1), it is possible to determine whether or not the update timing has arrived.

The present disclosure may be directed to a computer-readable storage medium having the program of the disclosure item (7) stored non-temporarily therein.

**Claims**

1. A deflation state detection device (100) comprising:

   an acquisition processing unit (41) configured to acquire a related value that is related to an air pressure of each pneumatic tire (2, 2A, 2B, 2C, 2D) mounted on a vehicle (1), based on a rotation speed (V1, V2, V3, V4) of the pneumatic tire (2, 2A, 2B, 2C, 2D);
   a detection processing unit (42) configured to detect a deflation state of the pneumatic tire (2, 2A, 2B, 2C, 2D) if a difference between the related value acquired by the acquisition processing unit (41) and a predetermined reference value exceeds a predetermined first threshold value;
   a first update processing unit (43) configured to, if a predetermined update operation is accepted, update the reference value, based on the related value acquired during a first period including a time of acceptance of the update operation; and

a determination processing unit (44) configured to determine whether or not an update timing for the reference value has arrived, based on the related value acquired after the difference exceeds a second threshold value that is equal to or less than the first threshold value and before the update operation is accepted.

2. The deflation state detection device (100) according to claim 1, wherein, if the related value acquired after the difference exceeds the second threshold value and before the update operation is accepted is included in a predetermined range including the reference value, the determination processing unit (44) determines that the update timing has arrived.

3. The deflation state detection device (100) according to claim 1 or 2, further comprising a second update processing unit (45) configured to, if the update timing is determined to have arrived by the determination processing unit (44), update the reference value, based on the related value acquired during a second period including a time of arrival of the update timing.

4. The deflation state detection device (100) according to any one of claims 1 to 3, further comprising a notification processing unit (46) configured to, if the update timing is determined to have arrived by the determination processing unit (44), notify that the update timing has arrived.

5. The deflation state detection device (100) according to any one of claims 1 to 4, wherein the second threshold value is smaller than the first threshold value.

6. A determination method executed by one or more processors (21), the determination method comprising:

an acquisition step of acquiring a related value that is related to an air pressure of each pneumatic tire (2, 2A, 2B, 2C, 2D) mounted on a vehicle (1), based on a rotation speed (V1, V2, V3, V4) of the pneumatic tire (2, 2A, 2B, 2C, 2D);
a detection step of detecting a deflation state of the pneumatic tire (2, 2A, 2B, 2C, 2D) if a difference between the related value acquired by the acquisition step and a predetermined reference value exceeds a predetermined first threshold value;
an update step of, if a predetermined update operation is accepted, updating the reference value, based on the related value acquired during a first period including a time of acceptance of the update operation; and
a determination step of determining whether or not an update timing for the reference value has arrived, based on the related value acquired after the difference exceeds a second threshold value that is equal to or less than the first threshold value and before the update operation is accepted.

7. A program for causing one or more processors (21) to execute:

an acquisition step of acquiring a related value that is related to an air pressure of each pneumatic tire (2, 2A, 2B, 2C, 2D) mounted on a vehicle (1), based on a rotation speed (V1, V2, V3, V4) of the pneumatic tire (2, 2A, 2B, 2C, 2D);
a detection step of detecting a deflation state of the pneumatic tire (2, 2A, 2B, 2C, 2D) if a difference between the related value acquired by the acquisition step and a predetermined reference value exceeds a predetermined first threshold value;
an update step of, if a predetermined update operation is accepted, updating the reference value, based on the related value acquired during a first period including a time of acceptance of the update operation; and
a determination step of determining whether or not an update timing for the reference value has arrived, based on the related value acquired after the difference exceeds a second threshold value that is equal to or less than the first threshold value and before the update operation is accepted.

FIG. 1

FIG. 2

1

11,100

VEHICLE

CONTROL UNIT

21 — CPU

22 — ROM

23 — RAM

41 — ACQUISITION PROCESSING UNIT

42 — DETECTION PROCESSING UNIT

43 — FIRST UPDATE PROCESSING UNIT

44 — DETERMINATION PROCESSING UNIT

45 — SECOND UPDATE PROCESSING UNIT

OPERATION DISPLAY UNIT — 12

INITIALIZATION BUTTON — 31

STORAGE UNIT — 13

WHEEL SPEED SENSOR — 14

FIG. 3

START

S11 — HAS ACQUISITION TIMING ARRIVED?

No

Yes

S12 — ACQUIRE ROTATION SPEEDS

S13 — ACQUIRE RELATED VALUES

RETURN

FIG. 4

FIG. 5

FIG. 6

START

S41
ACQUIRE
RELATED VALUES
No
Yes

S42
EXCEED SECOND
THRESHOLD VALUE
?
No
Yes

S43
HAS UPDATE
OPERATION BEEN
ACCEPTED?
Yes
No

S44
HAVE RELATED
VALUES BEEN
ACQUIRED?
No
Yes

S45
HAS ACQUISITION
TIMING ARRIVED?
No
Yes

S46
HAS SECOND
PERIOD ENDED?
No
Yes

S47
UPDATE REFERENCE VALUES

RETURN

FIG. 7

1

11,100

VEHICLE

CONTROL UNIT

21 — CPU

22 — ROM

23 — RAM

41 — ACQUISITION PROCESSING UNIT

42 — DETECTION PROCESSING UNIT

43 — FIRST UPDATE PROCESSING UNIT

44 — DETERMINATION PROCESSING UNIT

46 — NOTIFICATION PROCESSING UNIT

OPERATION DISPLAY UNIT — 12

INITIALIZATION BUTTON — 31

STORAGE UNIT — 13

WHEEL SPEED SENSOR — 14

Europäisches
Patentamt
European
Patent Office
Office européen
des brevets

## EUROPEAN SEARCH REPORT

**Application Number**

EP 25 18 8357

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2022/144025 A1 (CHO JAE SUNG [KR] ET AL) 12 May 2022 (2022-05-12)<br>* paragraph [0039] - paragraph [0104]; figures 1-11 *<br>----- | 1-7 | INV.<br>B60C23/06 |
| A | DE 20 2024 101214 U1 (NIRA DYNAMICS AB [SE]) 28 May 2024 (2024-05-28)<br>* paragraph [0018] - paragraph [0065]; figures 1-5 *<br>----- | 1-7 | |
| A | US 7 573 376 B2 (SUMITOMO RUBBER IND [JP]) 11 August 2009 (2009-08-11)<br>* column 2 - column 6; figures 1-3 *<br>----- | 1-7 | |
| | | | **TECHNICAL FIELDS SEARCHED (IPC)**<br><br>B60C |

The present search report has been drawn up for all claims

| Place of search | Date of completion of the search | Examiner |
|---|---|---|
| Munich | 10 November 2025 | Billen, Karl |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
  .......................................................................
& : member of the same patent family, corresponding
   document

EPO FORM 1503 03.82 (P4C01)

## ANNEX TO THE EUROPEAN SEARCH REPORT
## ON EUROPEAN PATENT APPLICATION NO.

EP 25 18 8357

This annex lists the patent family members relating to the patent documents cited in the above-mentioned European search report.
The members are as contained in the European Patent Office EDP file on
The European Patent Office is in no way liable for these particulars which are merely given for the purpose of information.

10-11-2025

| Patent document cited in search report | | Publication date | Patent family member(s) | | Publication date |
|---|---|---|---|---|---|
| US 2022144025 | A1 | 12-05-2022 | CN | 114454669 A | 10-05-2022 |
| | | | DE | 102021117586 A1 | 12-05-2022 |
| | | | KR | 20220063551 A | 17-05-2022 |
| | | | US | 2022144025 A1 | 12-05-2022 |
| DE 202024101214 | U1 | 28-05-2024 | NONE | | |
| US 7573376 | B2 | 11-08-2009 | CN | 1982100 A | 20-06-2007 |
| | | | EP | 1795381 A2 | 13-06-2007 |
| | | | JP | 4637011 B2 | 23-02-2011 |
| | | | JP | 2007161011 A | 28-06-2007 |
| | | | US | 2007132568 A1 | 14-06-2007 |

EPO FORM P0459

For more details about this annex : see Official Journal of the European Patent Office, No. 12/82

**REFERENCES CITED IN THE DESCRIPTION**

**Patent documents cited in the description**

- JP 2016196275 A